# EUROPEAN PATENT APPLICATION

(11) **EP 2 937 781 A1**
(43) Date of publication of application: **28.10.2015**
(21) Application number: 13867434.6
(22) Date of filing: 05.07.2013
(51) Int. Cl.: G06F 9/45

(54) **METHOD AND APPARATUS FOR CONTROLLING INVOKING OF HARDWARE INSTRUCTION**

(30) Priority: 24.12.2012 CN 201210571671
(71) Applicant: GRG Banking Equipment Co., Ltd., Guangdong 510663 (CN)
(72) Inventor: LUO, Panfeng, Guangzhou Guangdong 510663 (CN); DAI, Song, Guangzhou Guangdong 510663 (CN); LI, Zhengquan, Guangzhou Guangdong 510663 (CN); HUANG, Sanpeng, Guangzhou Guangdong 510663 (CN); HAN, Xiaoping, Guangzhou Guangdong 510663 (CN); HU, Xiaomin, Guangzhou Guangdong 510663 (CN)
(74) Representative: Maiwald Patentanwalts GmbH
(86) International application number: PCT/CN2013/078855
(87) International publication number: WO 2014/101384

(57) **Abstract**

Disclosed are a method and a system for controlling invoking of a hardware instruction. The method comprises: receiving a hardware instruction; determining whether the received hardware instruction is a legal instruction; and when it is determined that the received hardware instruction is a legal instruction, sending the hardware instruction to a corresponding hardware device. In this application, the legality of the hardware instruction is checked before the hardware instruction is sent to the hardware device, and only a legal hardware instruction can be sent to the hardware device for execution, thereby avoiding sending an illegal operation to the hardware device for execution, and improving the security of the hardware device.

## Description

The present application claims the priority of Chinese Patent Application No. 201210571671.4, entitled "METHOD AND APPARATUS FOR CONTROLLING INVOKING OF HARDWARE INSTRUCTION", filed on December 24, 2012 with the State Intellectual Property Office of People's Republic of China, which is incorporated herein by reference in its entirety.

### FIELD

The disclosure relates to the field of hardware instruction invoking, in particular to a method and a device for controlling invocation of a hardware instruction.

### BACKGROUND

A self-service equipment is a computer terminal device, with which a user autonomously handles various services. The self-service equipment includes components such as a keyboard, a card reader, and a background terminal, where each component may be a hardware component with its own instruction sets and instruction sequences. After receiving an instruction set or an instruction sequence transmitted by upper software, the hardware component executes instructions in the instruction set or the instruction sequence, and thus each hardware component of the self-service equipment can perform information interaction by executing instructions to complete various functions of the self-service equipment.

Instruction sets and instruction sequences of an existing self-service equipment include a normal operating instruction set, a normal operating instruction sequence, a testing and maintenance instruction set and a testing and maintenance instruction sequence. Each hardware component has an open permission to execute instructions, i.e., the hardware component can execute instructions in any instruction set or any instruction sequence transmitted by the upper software.

However, in a case that a hardware component executes certain instructions, such as an encrypted keyboard hardware self destructing instruction, the encrypted keyboard will be damaged, thereby reducing security of the self-service equipment.

### SUMMARY

The disclosure is to provide a method and a system for controlling invocation of a hardware instruction, to address a technical problem that a conventional self-service equipment has low security when invoking a hardware instruction.

To address the above problem, the disclosure provides a method for controlling invocation of a hardware instruction, where legitimate instructions and legitimate instruction sequences are pre-stored into a rule base. The method includes:
receiving a hardware instruction;
determining whether the received hardware instruction is a legitimate instruction; and
transmitting the hardware instruction to a corresponding hardware device, in a case that the received hardware instruction is determined as a legitimate instruction.

Preferably, the storing legitimate instructions and legitimate instruction sequences into a rule base includes:
executing once all operations provided by upper software in a learning and training mode;
recording all hardware instructions invoked during the execution of each operation, and recording an order of the invocation of all the hardware instructions;
storing all the hardware instructions invoked during the execution of each operation as legitimate instructions into the rule base; and
sequencing all the hardware instructions invoked during the execution of each operation according to the invoking order, and storing the sequenced hardware instructions invoked during the execution of each operation as a legitimate instruction sequence into the rule base.

Preferably, the storing legitimate instructions and legitimate instruction sequences into a rule base includes:
storing legitimate operating instructions and legitimate operating instruction sequences in a normal operating mode into a first rule base; and
storing legitimate testing and maintenance instructions and legitimate testing and maintenance instruction sequences in a testing and maintenance mode into a second rule base.

Preferably, the determining whether the received hardware instruction is a legitimate instruction includes:
determining whether the received hardware instruction is a legitimate instruction in a corresponding rule base; and
determining whether a device state of a hardware device is a normal state and whether a instruction sequence formed by previously invoked legitimate instructions and the received hardware instruction is a legitimate instruction sequence in the corresponding rule base, determining that the received hardware instruction is a legitimate instruction if yes.

Preferably, in a normal operating mode, the determining whether the received hardware instruction is a legitimate instruction further includes:
further determining whether the formed sequence is a legitimate instruction sequence corresponding to a currently executed operation, in a case that the device state of the hardware device is a normal state and the instruction sequence formed by the previously invoked legitimate instructions and the received instruction is a legitimate instruction sequence in the corresponding rule base; and determining that the received hardware instruction is a legitimate instruction if the formed sequence is a legitimate instruction sequence corresponding to the currently executed operation.

Preferably, before the determining whether the received hardware instruction is a legitimate instruction in a corresponding rule base, the method further includes: determining whether upper software requesting operation of the hardware instruction is licensed software; and
determining whether the received hardware instruction is a legitimate instruction in the corresponding rule base, in a case that the upper software requesting operation of the hardware instruction is licensed software.

A system for controlling invocation of a hardware instruction is also provided according to the disclosure. The system includes:
a first storage module, configured to pre-store legitimate instructions and legitimate instruction sequences into a rule base;
a receiving module, configured to receive a hardware instruction;
a first determination module, configured to determine whether the received hardware instruction is a legitimate instruction; and
a transmission module, configured to transmit the hardware instruction to a corresponding hardware device, in a case that the received hardware instruction is determined as a legitimate instruction.

Preferably, the first storage module includes:
an execution module, configured to execute once all operations provided by upper software in a learning and training mode;
a first recording module, configured to record all hardware instructions invoked during the execution of each operation, and to record an order of the invocation of all the hardware instructions;
a second storage module, configured to store all the hardware instructions invoked during the execution of each operation as legitimate instructions into the rule base; and
a third storage module, configured to sequence all the hardware instructions invoked during the execution of each operation according to the invoking order, and to store the sequenced hardware instructions invoked during the execution of each operation as a legitimate instruction sequence into the rule base.

Preferably, the first storage module includes:
a fourth module, configured to store legitimate operating instructions and legitimate operating instruction sequences in a normal operating mode into a first rule base; and
a fifth storage module, configured to store legitimate testing and maintenance instructions and legitimate testing and maintenance instruction sequences in a testing and maintenance mode into a second rule base.

Preferably, the first determination module includes:
a second determination module, configured to determine whether the received hardware instruction is a legitimate instruction in a corresponding rule base; and
a third determination module, configured, in a case that the received hardware instruction is a legitimate instruction in the corresponding rule base, to determine whether a device state of a hardware device is a normal state and whether a instruction sequence formed by previously invoked legitimate instructions and the received hardware instruction is a legitimate instruction sequence in the corresponding rule base.

Preferably, in a normal operating mode, the first determination module further includes:
a fourth determination module, configured to determine whether the formed sequence is a legitimate instruction sequence corresponding to a currently executed operation, in a case that the device state of the hardware device is a normal state and the instruction sequence formed by the previously invoked legitimate instructions and the received instruction is a legitimate instruction sequence in the corresponding rule base.

Preferably, the first determination further includes a fifth determination module, configured to determine whether upper software requesting operation of the hardware instruction is licensed software; and to trigger the second determination module if the upper software requesting operation of the hardware instruction is licensed software.

Compared with conventional technology, the disclosure may have following advantages.

According to the disclosure, a method for controlling invocation of a hardware instruction is provided. Firstly, legitimate instructions and legitimate instruction sequences are pre-stored into a rule base. After a hardware instruction is received, it is determined whether the received hardware instruction is a legitimate instruction. In a case that the received hardware instruction is determined as a legitimate instruction, the hardware instruction is transmitted to a corresponding hardware device. According to the disclosure, legality of a hardware instruction is determined before the hardware instruction is transmitted to a hardware device, and the hardware instruction is transmitted to the hardware device for execution only if the hardware instruction is legitimate, which may avoid transmitting an illegitimate operation to the hardware device for execution, so as to improve security of the hardware device.

Certainly, it is unnecessary for a product according to the disclosure to have all the above advantages.

### BRIEF DESCRIPTION OF THE DRAWINGS

For clarity of the technical solutions for the embodiments of the present disclosure, drawings for the embodiments of the present disclosure are briefly described as follows. Apparently, the drawings described below are merely a few embodiments of the disclosure, and persons of ordinary skill in the art can derive other drawings according to the drawings without any creative effort.
Figure 1 is a flow chart of a method for controlling invocation of a hardware instruction according to the disclosure;
Figure 2 is a flow chart of a process of a method for controlling invocation of a hardware instruction in a normal service mode according to the disclosure with respect to storing legitimate instructions and legitimate instruction sequences into a rule base;
Figure 3 is a flow chart of a method for controlling invocation of a hardware instruction in a normal service mode according to the disclosure;
Figure 4 is a flow chart of determining, in a normal service mode, whether a received hardware instruction is a legitimate instruction according to the disclosure;
Figure 5 is a flow chart of a method for controlling invocation of a hardware instruction in a testing and maintenance mode according to the disclosure;
Figure 6 is a flow chart of determining, in a testing and maintenance mode, whether a received hardware instruction is a legitimate instruction according to the disclosure;
Figure 7 is a schematic structural diagram of a system for controlling invocation of a hardware instruction according to the disclosure;
Figure 8 is a schematic structural diagram of a first storage module according to the disclosure;
Figure 9 is a schematic structural diagram of a first determination module according to the disclosure;
Figure 10 is a schematic structural diagram of a first storage module according to the disclosure;
Figure 11 is a schematic structural diagram of a system for controlling invocation of a hardware instruction in a normal service mode according to the disclosure;
Figure 12 is a schematic structural diagram of a system for controlling invocation of a hardware instruction in a testing and maintenance mode according to the disclosure;
Figure 13 is a schematic structural diagram of a first determination module in a normal operating mode according to the disclosure; and
Figure 14 is a schematic structural diagram of a first determination module in a testing and maintenance mode according to the disclosure.

### DETAILED DESCRIPTION

A method for controlling invocation of a hardware instruction is provided according to the disclosure. The method includes: receiving a hardware instruction; determining whether the received hardware instruction is a legitimate instruction; and transmitting the hardware instruction to a corresponding hardware device, in a case that the received hardware instruction is determined as a legitimate instruction.

Technical solutions of the embodiments of the present disclosure will be illustrated completely and clearly in conjunction with the drawings for the embodiments of the disclosure. Apparently, the described embodiments are merely a few rather than all of the embodiments of the present disclosure. All other embodiments obtained by persons of ordinary skill in the art based on the embodiment of the present disclosure without creative efforts shall fall within the protection scope of the present disclosure.

### One embodiment

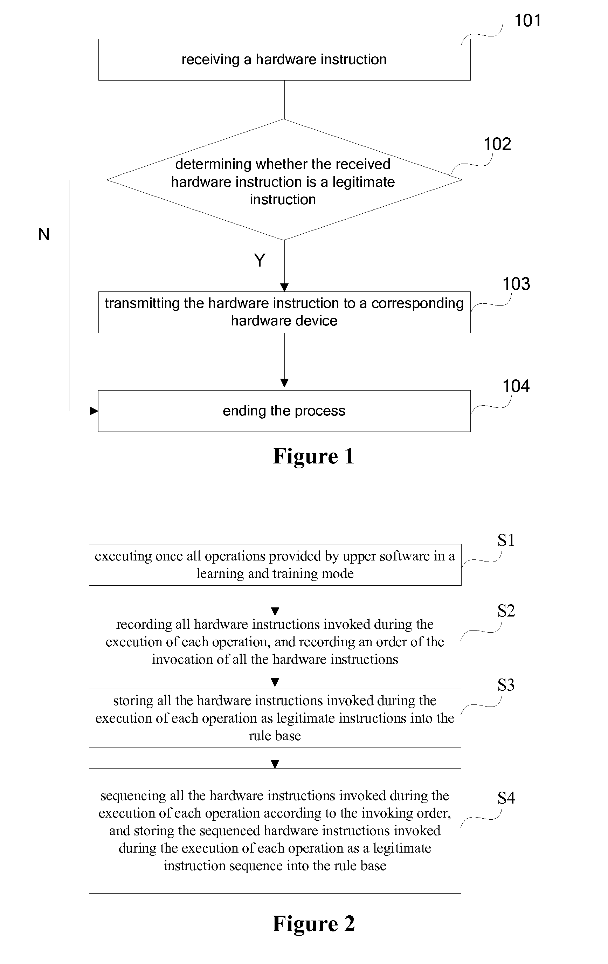

Figure 1 shows a flow chart of a method for controlling invocation of a hardware instruction according to the disclosure. In this embodiment, a self-service equipment such as an automatic teller machine (ATM) is used as an application scenario, to describe in detail the method for controlling invocation of a hardware instruction provided according to the disclosure. The method for controlling invocation of a hardware instruction may include following steps.

Step 101 includes: receiving a hardware instruction.

The self-service equipment may have, from hardware to software, three layers which are a hardware layer, a driver layer and a layer of ATM control (ATMC, upper software), where the upper software includes following types: an upper service system, ATM (Automated Tellermachine) device testing software, and standard service middleware. To implement control of hardware of the ATM, the upper software should access the hardware by invoking an interface provided by the driver layer. Therefore, in this embodiment, the driver layer of the self-service equipment receives the hardware instruction.

Step 102 includes: determining whether the received hardware instruction is a legitimate instruction. In a case that the received hardware instruction is a legitimate instruction, step 103 is executed; otherwise step 104 is executed.

The determination of legitimacy of the instruction according to the embodiment mainly includes: determining whether the received hardware instruction is a legitimate instruction in a rule base; and determining whether a device state of a hardware device is a normal state and whether a instruction sequence formed by previously invoked legitimate instructions and the received hardware instruction is a legitimate instruction sequence in the rule base.

That is, to determine whether the received hardware instruction is a legitimate instruction, it is determined firstly whether the hardware instruction is a legitimate instruction in the rule base, and then it is determined whether a device state of a hardware device is a normal state and whether a instruction sequence formed by previously invoked legitimate instructions and the received hardware instruction is a legitimate instruction sequence in the rule base. In a case that the device state of the hardware device is a normal state and the instruction sequence formed by previously invoked legitimate instructions and the received hardware instruction is a legitimate instruction sequence in the rule base, the received hardware instruction is a legitimate instruction.

Legitimate instructions and legitimate instruction sequences have been pre-stored in the rule base. In the embodiment, Figure 2 shows a flow chart of pre-storing legitimate instructions and legitimate instruction sequences into a rule base according to the disclosure. The storing process includes following steps S1 to S4.

S1 includes: executing once all operations provided by upper software in a learning and training mode.

In this method, operating modes of the self-service equipment may be classified into three types, which are a learning and training mode, a normal service mode and a testing and maintenance mode. In the learning and training mode, the self-service equipment makes the service system to execute all operations, so as to store instructions and instruction sequences for all operations when a rule base is generated, and the self-service equipment operates in the learning and training mode when the rule base is generated. The all operations include normal service operations and testing and maintenance operations. The normal service mode refers to an operating mode in which the self-service equipment provides services to a user. The testing and maintenance mode refers to an operating mode in which testing and maintenance are performed on the self-service equipment.

It should be noted that the legitimate instructions and the legitimate instruction sequences in the normal service mode and those in the testing and maintenance mode are stored into various rule bases. Therefore, during determination of whether the hardware instruction is a legitimate instruction, hardware instructions received in different modes need to be compared with legitimate instructions and legitimate instruction sequences in respective rule bases corresponding to the modes, to determine whether the received hardware instructions are legitimate instructions. The determination of hardware instructions in various modes is described in detail in subsequent embodiments, and is not further described in this embodiment.

S2 includes: recording all hardware instructions invoked during the execution of each operation, and recording an order of the invocation of all the hardware instructions.

According to the embodiment, in the learning and training mode, when executing any operation, the self-service equipment records all hardware instructions invoked during the execution of the operation, and records an order of the invocation of all the hardware instructions so as to form an instruction sequence of all the hardware instructions.

S3 includes: storing all the hardware instructions invoked during the execution of each operation as legitimate instructions into the rule base.

S4 includes: sequencing all the hardware instructions invoked during the execution of each operation according to the invoking order, and storing the sequenced hardware instructions invoked during the execution of each operation as a legitimate instruction sequence into the rule base.

Step 103 includes: transmitting the hardware instruction to a corresponding hardware device, in a case that the received hardware instruction is determined as a legitimate instruction.

In a case that the received hardware instruction is a legitimate instruction, the hardware instruction is transmitted to a corresponding hardware device, and the hardware device executes the hardware instruction.

Step 104 includes: ending the process.

With the method for controlling invocation of a hardware instruction provided according to the embodiment, legality of a hardware instruction is determined before the hardware instruction is transmitted to a hardware device, and the hardware instruction is transmitted to the hardware device for execution only if the hardware instruction is legitimate, which may avoid transmitting an illegitimate operation to the hardware device for execution, thereby improving security of the hardware device.

An overview of the process of invocation of a hardware instruction is illustrated in detail in the method for controlling invoking a hardware instruction as shown in Figure 1. Processes of invoking a hardware instruction respectively in a normal service mode of the self-service equipment and in a testing and maintenance mode of the self-service equipment are described as follows.

### Another embodiment

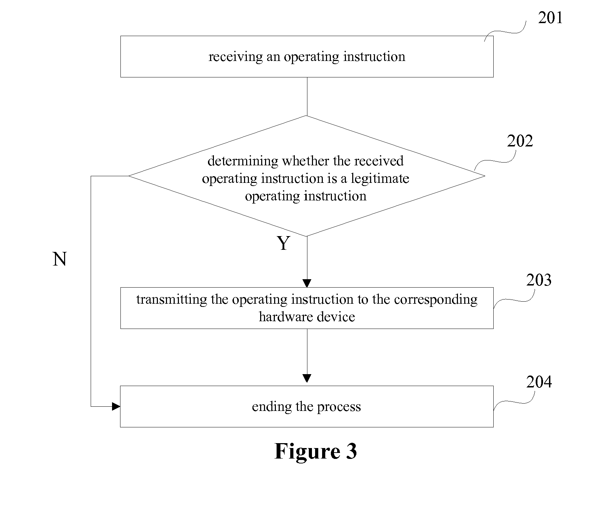

Figure 3 shows a flow chart of a method for controlling invocation of a hardware instruction in a normal service mode provided according to the disclosure. The method includes following steps 201 to 204.

Step 201 includes: receiving an operating instruction.

In a normal service mode, a hardware instruction received by the self-service equipment is an operating instruction. As in the foregoing embodiment, the driver layer receives the operating instruction in this embodiment. Subsequent steps are operations upon the operating instruction.

In the normal service mode, legitimate operating instructions and legitimate operating instruction sequences are stored in a first rule base. A process for establishing the first rule base according to the embodiment is the same as the process for establishing a rule base as shown in Figure 2. The process for establishing the rule base according to the embodiment includes: in a learning and training mode, executing once all operations of all service types in the normal operating mode provided by upper software; recording all hardware instructions invoked during the execution of each operation, and recording an order of the invocation of all the hardware instructions; storing all the hardware instructions invoked during the execution of each operation as legitimate instructions into the rule base; sequencing all the hardware instructions invoked during the execution of each operation according to the invoking order, and storing the sequenced hardware instructions invoked during the execution of each operation as a legitimate instruction sequence into the first rule base.

Step 202 includes: determining whether the received operating instruction is a legitimate operating instruction. In a case that the received hardware instruction is a legitimate operating instruction, step 203 is executed; otherwise step 204 is executed.

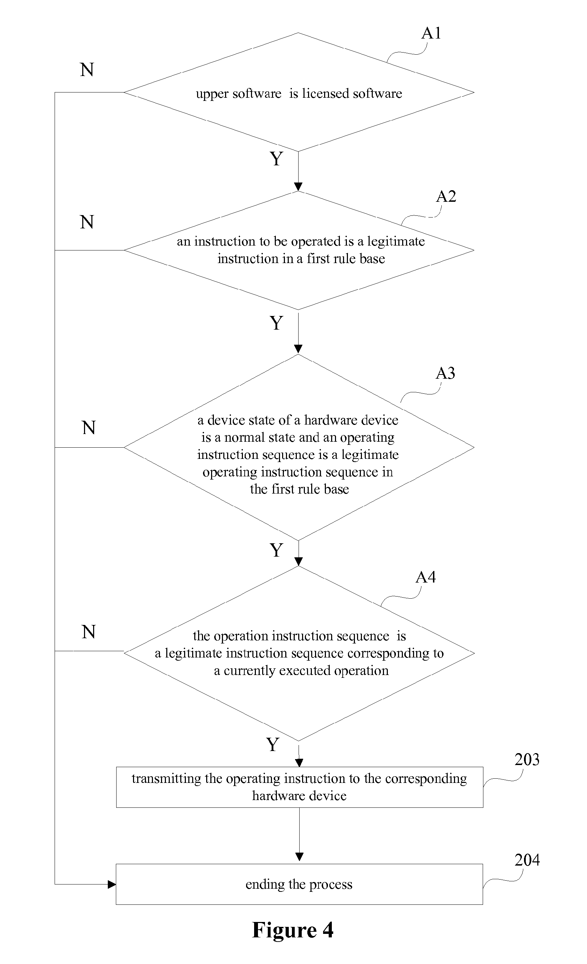

Since the legitimate operating instructions and the legitimate operating instruction sequences in the normal operating mode are stored in the first rule base, when whether the received operating instruction is a legitimate operating instruction is determined, it needs to compare the received operating instruction with the legitimate operating instructions in the first rule base and compare the executing order of the received operating instruction with the order of the legitimate operating instruction sequence in the first rule base. The determination process is shown in Figure 4.

Figure 4 shows a flow chart of determining, in a normal service mode, whether a received operating instruction is a legitimate operating instruction. The determination includes following steps A1 to A4, steps 203 and 204.

A1 includes: determining whether upper software requesting operation of an instruction is licensed software. In a case that the upper software is licensed software, step A2 is executed, otherwise step 204 is executed.

The licensed software refers to service software which is allowed to operate in a normal service mode of the self-service equipment.

A2 includes: determining whether a received operating instruction is a legitimate operating instruction in a first rule base.

According to the embodiment, the self-service equipment compares the received operating instruction with each legitimate operating instruction in the first rule base one by one, to determine whether the operating instruction is a legitimate operating instruction in the first rule base. In a case that the received operating instruction is a legitimate operating instruction in the first rule base, step A3 is executed; otherwise step 204 is directly executed.

A3 includes: determining whether a device state of a hardware device is a normal state and whether an operating instruction sequence formed by previously invoked operating instructions and the received operating instruction is a legitimate operating instruction sequence in the first rule base.

Firstly, to normally perform an operation, a hardware device should be in a normal device state. Therefore in a case that the device state of the hardware device is a normal state, the device state of the hardware device to execute the operating instruction, and operating instruction sequences previously executed by the hardware device are acquired; and in a case that the state of the hardware device is abnormal, the determination of legitimacy of the instruction is not further performed, and step 204 is directly executed.

In a case that the device state of the hardware device is the normal state, whether the sequence of operating instructions consisted of the legitimate operating instructions previously invoked and the received operating instruction is the sequence of legitimate operating instructions in the first rule base is further determined. In a case that the above determination is legitimate, step A4 is executed; and if it is determined illegitimate, step 204 is executed.

A4 includes: determining whether operating instruction sequence formed by previously invoked operating instructions and the received operating instruction is a legitimate instruction sequence corresponding to a currently executed operation, step 203 is executed if yes, or step 204 is executed if no.

As shown in Figure 4, in this embodiment, the determining whether the received operating instruction is a legitimate operating instruction may include: determining whether the received hardware instruction is a legitimate instruction in the corresponding rule base, in a case that the upper software requesting operation of the hardware instruction is determined as licensed software; and if yes, determining whether a device state of a hardware device is a normal state and whether an operating instruction sequence formed by previously invoked operating instructions and the received operating instruction is a legitimate operating instruction sequence in the first rule base.

That is, in a case that the received operating instruction is a legitimate operating instruction in the first rule base, the device state of the hardware device is a normal state, the operating instruction sequence formed by the operating instruction and previously invoked operating instructions is a legitimate instruction sequence in the first rule base, and the formed operating instruction sequence formed is a legitimate operating instruction sequence corresponding to the currently executed operation, the received operating instruction is a legitimate operating instruction.

Step 203 includes: transmitting the operating instruction to the corresponding hardware device, in a case that the received operating instruction is determined as a legitimate operating instruction.

In a case that it is determined that the received operating instruction is a legitimate operating instruction, the operating instruction is transmitted to the corresponding hardware device, to be executed by the hardware device.

Step 204 includes: ending the process.

With the method provided according to the embodiment, in an operating mode, when operating instructions are invoked, only legitimate operating instructions are invoked, and illegitimate operating instructions will not be transmitted to a hardware device for execution, thereby ensuring security of a self-service equipment.

### Another embodiment

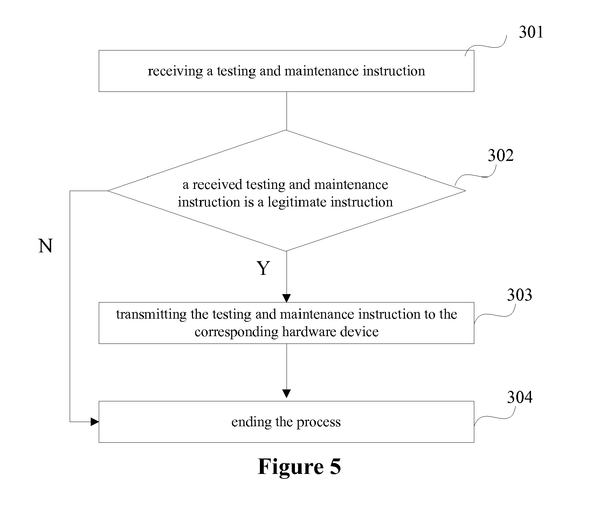

Figure 5 shows a flow chart of a method for controlling invocation of a hardware instruction in a testing and maintenance mode provided according to the disclosure. The method includes following steps 301 to 304.

Step 301 includes: receiving a testing and maintenance instruction.

In a testing and maintenance mode, the hardware instruction received by the self-service equipment is a testing and maintenance instruction. As in the foregoing embodiments, the driver layer receives the testing and maintenance hardware instruction in this embodiment. Subsequent steps are operations according to the testing and maintenance instruction.

In the testing and maintenance mode, legitimate testing and maintenance instructions and legitimate testing and maintenance instruction sequences are stored in a second rule base. A process for establishing the second rule base according to the embodiment is the same as those according to the foregoing two embodiments. The process includes: in a learning and training mode, executing once all test cases provided by upper software; recording all testing and maintenance instructions invoked during the execution for each operation as legitimate testing and maintenance instructions; and storing the legitimate testing and maintenance instructions into a second rule base; and sequencing the testing and maintenance instructions invoked during the execution for each operation according to an order of invocation, and storing the sequenced all testing and maintenance instructions invoked during the execution for each operation as a legitimate testing and maintenance instruction sequence into the second rule base.

Step 302 includes: determining whether a received testing and maintenance instruction is a legitimate testing and maintenance instruction; executing step 303, in a case that the received testing and maintenance instruction is a legitimate testing and maintenance instruction; otherwise executing step 304.

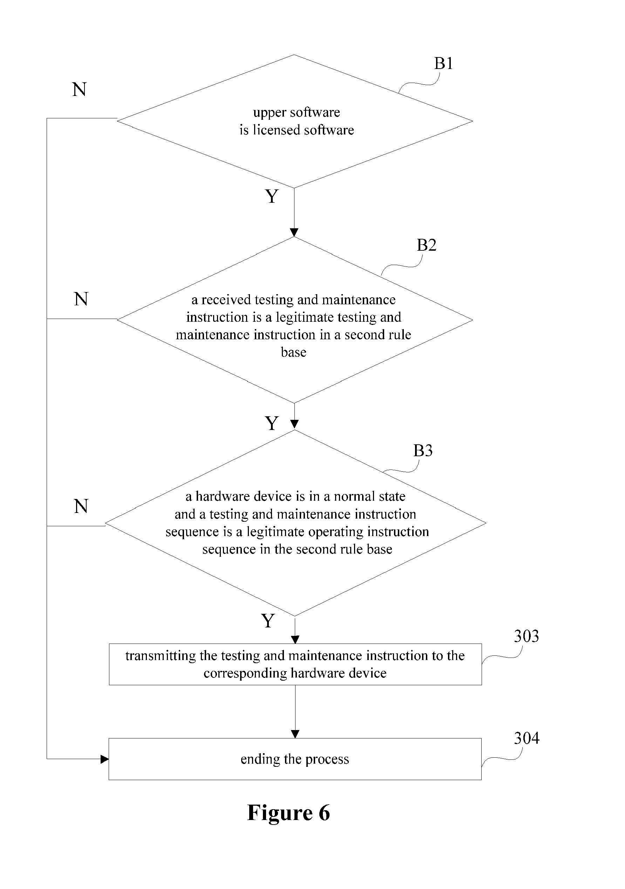

Since the legitimate testing and maintenance instructions and the legitimate testing and maintenance instruction sequences in the testing and maintenance mode are stored in the second rule base, to determine whether a received testing and maintenance instruction is a legitimate testing and maintenance instruction, it needs to compare the received testing and maintenance instruction with the legitimate testing and maintenance instructions in the second rule base and compare an execution order of the testing and maintenance instruction with the legitimate testing and maintenance instruction sequences in the second rule base. A detailed process refers to Figure 6.

Figure 6 shows a flow chart of determining, in a testing and maintenance mode, whether a received testing and maintenance instruction is a legitimate testing and maintenance instruction according to the disclosure. The determination includes following steps B1 to B3, steps 303 and 304.

B1 includes: determining whether upper software requesting operation of a testing and maintenance instruction is licensed software. If the upper software requesting operation a testing and maintenance instruction is licensed software, step B2 is executed; and if the upper software requesting operation of a testing and maintenance instruction is not licensed software, step 304 is executed.

According to the embodiment, in the testing and maintenance mode, the licensed software is testing software which is allowed to operate in the testing and maintenance mode of the self-service equipment.

B2 includes: determining whether a received testing and maintenance instruction is a legitimate testing and maintenance instruction in a second rule base.

Each received testing and maintenance instruction according to which an operation is requested by the upper software is compared with legitimate testing and maintenance instructions in the second rule base. In a case that the received testing and maintenance instruction is a legitimate testing and maintenance instruction in the second rule base, step B3 is further executed, and in a case that the received testing and maintenance instruction is not a legitimate testing and maintenance instruction in the second rule base, step 304 is executed.

B3 includes: determining whether a state of a hardware device to execute the legitimate testing and maintenance instruction is a normal state and whether a testing and maintenance instruction sequence formed by legitimate testing and maintenance instructions previously invoked and the received testing and maintenance instruction is a legitimate operating instruction sequence in the second rule base.

Firstly, to normally perform an operation, a hardware device should be in a normal device state. Therefore in a case that the device state of the hardware device is a normal state, the device state of the hardware device to execute the testing and maintenance instruction, and testing and maintenance instruction sequences previously executed by the hardware device are acquired, and it is determined whether a testing and maintenance instruction sequence formed by legitimate testing and maintenance instructions previously invoked and the received testing and maintenance instruction is a legitimate operating instruction sequence in the second rule base; and in a case that the state of the hardware device is abnormal, the determination of legitimacy of the testing and maintenance instruction is not further performed, and step 304 is directly executed.

In a case that the sequence of testing and maintenance instructions formed by the legitimate testing and maintenance instructions previously invoked and the received testing and maintenance instruction is a legitimate testing and maintenance instruction sequence in the second rule base, step 303 is executed; otherwise step 304 is executed.

Step 303 includes: transmitting the testing and maintenance instruction to the corresponding hardware device, in a case that the received testing and maintenance instruction is determined as a legitimate instruction.

In a case that the testing and maintenance instruction is determined as a legitimate testing and maintenance instruction, the testing and maintenance instruction is transmitted to the corresponding hardware device, and the hardware device executes the testing and maintenance instruction.

Step 304 includes: ending the process.

According to the embodiment, through verifying legitimacy of a testing tool, and determining whether an invoked testing and maintenance instruction and a new testing and maintenance instruction sequence formed by the testing and maintenance instruction to be invoked and a instruction sequence previously invoked are legitimate, the testing and maintenance instruction may be invoked and executed only if it is ensured that the testing and maintenance instruction and the new testing and maintenance instruction sequence are legitimate, thereby ensuring security of the self-service equipment in the testing and maintenance mode.

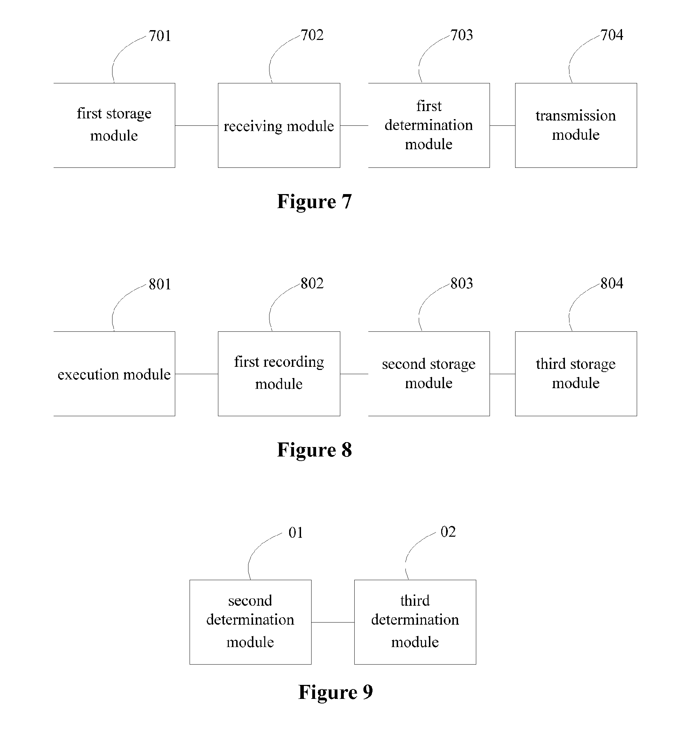

Corresponding to the method according to above embodiments, a system for controlling invocation of a hardware instruction is also provided according to the disclosure. Referring to Figure 7, the system for controlling invocation of a hardware instruction includes: a first storage module 701, a receiving module 702, a first determination module 703, and a transmission module 704.

The first storage module 701 is configured to pre-store legitimate instructions and legitimate instruction sequences into a rule base.

Referring to Figure 8, the first storage module 701 includes: an execution module 801, a first recording module 802, a second storage module 803, and a third storage module 804.

The execution module 801 is configured to execute once all operations provided by upper software in a learning and training mode.

In the learning and training mode, a service system operates all provided services, so as to store instructions and instruction sequences for all services when a rule base is generated.

The first recording module 802 is configured to record all hardware instructions invoked during the execution of each operation, and to record an order of the invocation of all the hardware instructions.

The second storage module 803 is configured to store all the hardware instructions invoked during the execution of each operation as legitimate instructions into the rule base.

The third storage module 804 is configured to sequence all the hardware instructions invoked during the execution of each operation according to the invoking order, and to store the sequenced hardware instructions invoked during the execution of each operation as a legitimate instruction sequence into the rule base.

The receiving module 702 is configured to receive a hardware instruction.

To implement control of hardware of the ATM, the upper software should access the hardware by invoking an interface provided by a driver layer. Therefore, in this embodiment, the driver layer of the self-service equipment receives the hardware instruction.

The first determination module 703 is configured to determine whether the received hardware instruction is a legitimate instruction.

According to the embodiment, the first determination module 703 is configured to determine whether the received hardware instruction is a legitimate instruction, which includes: determining whether the hardware instruction is a legitimate instruction in a corresponding rule base, and determining whether an instruction sequence formed by legitimate instructions previously invoked and the hardware instruction is a legitimate instruction sequence. Figure 9 shows a schematic structural diagram of the first determination module 703. The first determination module 703 includes a second determination module 01, and a third determination module 02.

The second determination module 01 is configured to determine whether the received hardware instruction is a legitimate instruction in a corresponding rule base.

The third determination module 02 is configured to determine whether a hardware state of a hardware device is a normal state and whether an instruction sequence formed by legitimate instructions previously invoked and the received hardware instruction is a legitimate instruction sequence in the corresponding rule base, in a case that the received hardware instruction is a legitimate instruction in the corresponding rule base.

The transmission module 704 is configured to transmit the hardware instruction to a corresponding hardware device, in a case that the received hardware instruction is determined as a legitimate instruction.

In a case that the received hardware instruction is a legitimate instruction, the hardware instruction is transmitted to the corresponding hardware device, and the hardware device executes the hardware instruction.

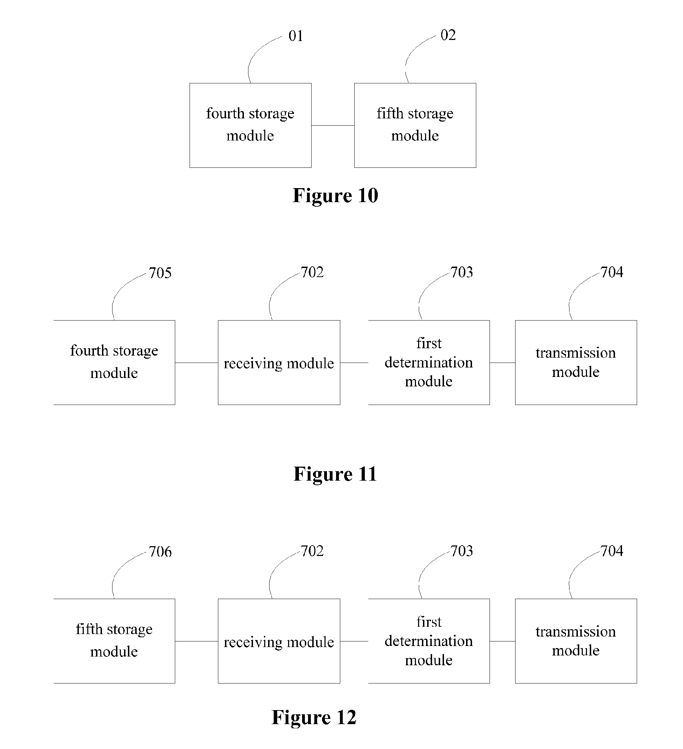

Besides the learning and training mode, operating modes of the self-service equipment further include a normal service mode and a testing and maintenance mode. The first storage module 701 is different in different modes of the self-service equipment. Figure 10 shows a schematic structural diagram of a first storage module 701. The first storage module 701 includes:

a fourth storage module 705, configured to s store legitimate operating instructions and legitimate operating instruction sequences in a normal operating mode into a first rule base; and

a fifth storage module 706 configured to configured to store legitimate testing and maintenance instructions and legitimate testing and maintenance instruction sequences in a testing and maintenance mode into a second rule base.

In the normal service mode of the self-service equipment, the fourth storage module of the first storage module may be used. Figure 11 shows a schematic structural diagram of a system for controlling invocation of a hardware instruction in the normal service mode according to the disclosure. In the testing and maintenance mode, the fifth storage module of the first storage module may be used. Figure 12 shows a schematic structural diagram of a system for controlling invocation of a hardware instruction in the testing and maintenance mode according to the disclosure.

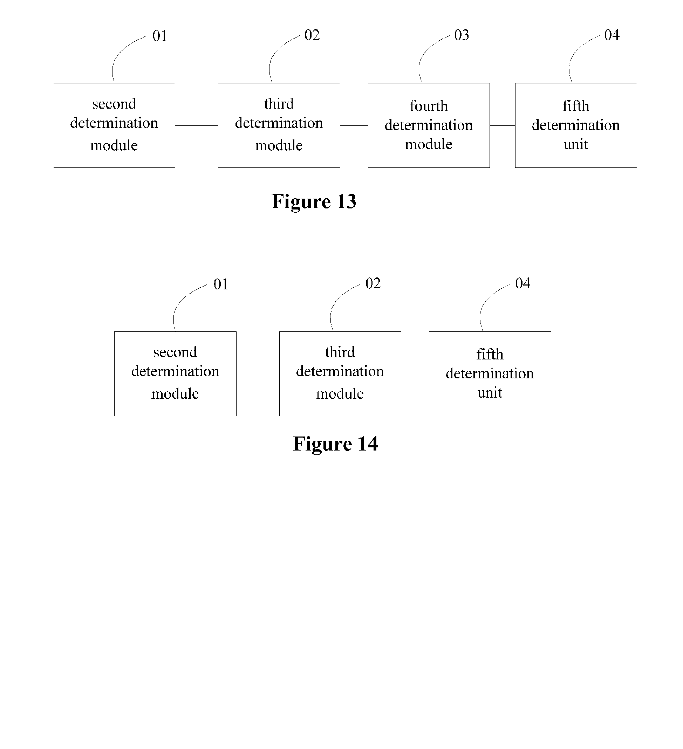

Figure 13 shows a schematic structural diagram of the first determination module 703 in the normal operating mode. The first determination module 703 includes:
a second determination module 01, configured to determine whether the received operating instruction is a legitimate operating instruction in a first rule base;
a third determination module 02, configured, in a case that the received operating instruction is a legitimate operating instruction in the first rule base, to determine whether a device state of a hardware device is a normal state and whether an operating instruction sequence formed by previously invoked legitimate instructions and the received operating instruction is a legitimate operating instruction sequence in the first rule base;
a fourth determination module 03, configured to determine whether the formed operating instruction sequence is a legitimate operating instruction sequence corresponding to a currently executed operation, in a case that the device state of the hardware device is a normal state and the operating instruction sequence formed by the previously invoked legitimate operating instructions and the received operating instruction is a legitimate operating instruction sequence in the corresponding rule base; and
a fifth determination module 04, configured to configured to determine whether upper software requesting operation of the operating instruction is licensed software; and to trigger the second determination module 01 if the upper software requesting operation of the operating instruction is licensed software.

Figure 14 shows a schematic structural diagram of the first determination module 703 in the testing and maintenance mode. The first determination module 703 includes:
a second determination module 01, configured to determine whether the received testing and maintenance instruction is a legitimate testing and maintenance instruction in a second rule base;
a third determination module 02, configured, in a case that the received testing and maintenance instruction is a legitimate testing and maintenance instruction in the second rule base, to determine whether a device state of a hardware device is a normal state and whether an testing and maintenance instruction sequence formed by previously invoked legitimate instructions and the received testing and maintenance instruction is a legitimate testing and maintenance instruction sequence in the second rule base; and
a fifth determination module 04, configured to configured to determine whether upper software requesting operation of the testing and maintenance instruction is licensed software; and to trigger the second determination module 01 if the upper software requesting operating the testing and maintenance instruction is licensed software.

It should be noted that the embodiments of the present disclosure are described in a progressive manner, and each embodiment places emphasis on the difference from other embodiments, therefore, similarities of various embodiments can mutually refer to each other. For the embodiments of the device, since they are similar to the embodiments of the method and are described more briefly, and relative description can refer to description of the embodiments of the method.

Finally, it should also be noted that a relationship term such as "the first" and "the second" herein is merely used to distinguish one entity or operation from another entity or operation, and does not necessarily require or imply that there is an actual relationship or sequence between these entities or operations. Furthermore, terms "include", "comprise" or any other variations thereof are intended to cover non-exclusive "include", so that a process, a method, an object or a device including a series of elements not only include the elements, but also include other elements not explicitly listed, or also include inherent elements of the process, the method, the object or the device. Without more limitation, an element defined in a sentence "include a..."does not exclude a case that there is also another same element in the process, the method, the object or the device including the described element.

To facilitate the description, the above device is described with various functional units. Certainly, functions of the units may be implemented through one or more software and/or hardware to implement the disclosure.

According to the description of the above embodiments, those skilled in the art can clearly understand that the disclosure may be implemented through software and necessary general hardware platforms. Based on such understanding, the essence of the technical solutions, or the part of the disclosure contributing to conventional technology may be embodied in a form of a software product, which may be stored in a storage medium including ROM/RAM, a magnetic disk, a CD, or a plurality of instructions configured to enable a compute device (may be a personal computer, a server, or a network device, etc) to execute all or part of the method according to the embodiments of the disclosure.

The method and system for controlling invocation of a hardware instruction are described in detail according to the disclosure. The principle and embodiments of the disclosure are illustrated particular embodiments. The illustration of the embodiments is merely to help understanding the method and the core idea of the disclosure. For those skilled in the art, modifications may be made on embodiments and application scope based on the idea of the disclosure. In conclusion, the specification should not be construed as a limitation to the disclosure.

## Claims

1. A method for controlling invocation of a hardware instruction, wherein legitimate instructions and legitimate instruction sequences are pre-stored into a rule base, and the method comprises:
receiving a hardware instruction;
determining whether the received hardware instruction is a legitimate instruction; and
transmitting the hardware instruction to a corresponding hardware device, in a case that the received hardware instruction is determined as a legitimate instruction.

2. The method for controlling invocation of a hardware instruction according to claim 1, wherein the storing legitimate instructions and legitimate instruction sequences into a rule base comprises:
executing once all operations provided by upper software in a learning and training mode;
recording all hardware instructions invoked during the execution of each operation, and recording an order of the invocation of all the hardware instructions;
storing all the hardware instructions invoked during the execution of each operation as legitimate instructions into the rule base; and
sequencing all the hardware instructions invoked during the execution of each operation according to the invoking order, and storing the sequenced hardware instructions invoked during the execution of each operation as a legitimate instruction sequence into the rule base.

3. The method for controlling invocation of a hardware instruction according to claim 1, wherein the storing legitimate instructions and legitimate instruction sequences into a rule base comprises:
storing legitimate operating instructions and legitimate operating instruction sequences in a normal operating mode into a first rule base; and
storing legitimate testing and maintenance instructions and legitimate testing and maintenance instruction sequences in a testing and maintenance mode into a second rule base.

4. The method for controlling invocation of a hardware instruction according to any one of claim 1 to claim 3, wherein the determining whether the received hardware instruction is a legitimate instruction comprises:
determining whether the received hardware instruction is a legitimate instruction in a corresponding rule base; and
determining whether a device state of a hardware device is a normal state and whether a instruction sequence formed by previously invoked legitimate instructions and the received hardware instruction is a legitimate instruction sequence in the corresponding rule base, determining that the received hardware instruction is a legitimate instruction if yes.

5. The method for controlling invocation of a hardware instruction according to claim 4, wherein in a normal operating mode, the determining whether the received hardware instruction is a legitimate instruction further comprises:
further determining whether the formed sequence is a legitimate instruction sequence corresponding to a currently executed operation, in a case that the device state of the hardware device is a normal state and the instruction sequence formed by the previously invoked legitimate instructions and the received instruction is a legitimate instruction sequence in the corresponding rule base; and
determining that the received hardware instruction is a legitimate instruction if the formed sequence is a legitimate instruction sequence corresponding to the currently executed operation.

6. The method for controlling invocation of a hardware instruction according to claim 4, wherein before the determining whether the received hardware instruction is a legitimate instruction in a corresponding rule base, the method further comprises: determining whether upper software requesting operation of the hardware instruction is licensed software; and
determining whether the received hardware instruction is a legitimate instruction in the corresponding rule base, in a case that the upper software requesting operation of the hardware instruction is licensed software.

7. A system for controlling invocation of a hardware instruction, comprising:
a first storage module, configured to pre-store legitimate instructions and legitimate instruction sequences into a rule base;
a receiving module, configured to receive a hardware instruction;
a first determination module, configured to determine whether the received hardware instruction is a legitimate instruction; and
a transmission module, configured to transmit the hardware instruction to a corresponding hardware device, in a case that the received hardware instruction is determined as a legitimate instruction.

8. The system for controlling invocation of a hardware instruction according to claim 7, wherein the first storage module comprises:
an execution module, configured to execute once all operations provided by upper software in a learning and training mode;
a first recording module, configured to record all hardware instructions invoked during the execution of each operation, and to record an order of the invocation of all the hardware instructions;
a second storage module, configured to store all the hardware instructions invoked during the execution of each operation as legitimate instructions into the rule base; and
a third storage module, configured to sequence all the hardware instructions invoked during the execution of each operation according to the invoking order, and to store the sequenced hardware instructions invoked during the execution of each operation as a legitimate instruction sequence into the rule base.

9. The system for controlling invocation of a hardware instruction according to claim 7, wherein the first storage module comprises:
a fourth module, configured to store legitimate operating instructions and legitimate operating instruction sequences in a normal operating mode into a first rule base; and
a fifth storage module, configured to store legitimate testing and maintenance instructions and legitimate testing and maintenance instruction sequences in a testing and maintenance mode into a second rule base.

10. The system for controlling invocation of a hardware instruction according to any one of claim 7 to claim 9, wherein the first determination module comprises:
a second determination module, configured to determine whether the received hardware instruction is a legitimate instruction in a corresponding rule base; and
a third determination module, configured, in a case that the received hardware instruction is a legitimate instruction in the corresponding rule base, to determine whether a device state of a hardware device is a normal state and whether a instruction sequence formed by previously invoked legitimate instructions and the received hardware instruction is a legitimate instruction sequence in the corresponding rule base.

11. The system for controlling invocation of a hardware instruction according to claim 10, wherein in a normal operating mode, the first determination module further comprises:
a fourth determination module, configured to determine whether the formed sequence is a legitimate instruction sequence corresponding to a currently executed operation, in a case that the device state of the hardware device is a normal state and the instruction sequence formed by the previously invoked legitimate instructions and the received instruction is a legitimate instruction sequence in the corresponding rule base.

12. The system for controlling invocation of a hardware instruction according to claim 10, further comprising: a fifth determination module, configured to determine whether upper software requesting operation of the hardware instruction is licensed software; and to trigger the second determination module if the upper software requesting operation of the hardware instruction is licensed software.
